# EUROPÄISCHE PATENTSCHRIFT

(11) **EP 3 942 269 B1**
(45) Veröffentlichungstag und Bekanntmachung des Hinweises auf die Patenterteilung: **21.08.2024**
(21) Anmeldenummer: 20728732.7
(22) Anmeldetag: 27.05.2020
(51) Int. Cl.: G01M 1/16, G01M 1/32, G01M 1/34

(54) **VERFAHREN ZUM DYNAMISCHEN WUCHTEN EINES ROTATIONSKÖRPERS**
PROCEDURE FOR DYNAMIC BALANCING OF A ROTATING BODY
PROCÉDURE D'ÉQUILIBRAGE DYNAMIQUE D'UN CORPS EN ROTATION

(30) Priorität: 29.05.2019 DE 102019207940
(43) Veröffentlichungstag der Anmeldung: 26.01.2022
(73) Patentinhaber: Brose Fahrzeugteile SE & Co. Kommanditgesellschaft, Bamberg, 96052 Bamberg (DE)
(72) Erfinder: KALB, Roland, 96269 Rossach (DE); PFALZGRAF, Helmut, 97246 Eibelstadt (DE)
(74) Vertreter: FDST Patentanwälte
(86) Internationale Anmeldenummer: PCT/EP2020/064619
(87) Internationale Veröffentlichungsnummer: WO 2020/239793

(56) Entgegenhaltungen:
- WO-A1-2007/006356
- DE-A1- 102008 053 838
- US-A1- 2007 095 231
- US-A1- 2018 051 771

## Beschreibung

Die Erfindung betrifft ein Verfahren zum dynamischen Wuchten eines Rotationskörpers, insbesondere eines Motorgehäuses eines Elektromotors. Die Erfindung betrifft weiterhin eine Vorrichtung zum dynamischen Wuchten eines Rotationskörpers, und einen Elektromotor mit einem Rotationskörper, welcher mit dem Verfahren gewuchtet ist, sowie eine Verwendung des Verfahrens zum dynamischen Wuchten eines Motorgehäuses mit einem darin eingesetzten Magnetelement.

Rotierende oder rotationssymmetrische Bauteile weisen als Rotationskörper aufgrund von fertigungs- oder konstruktionsbedingten Toleranzen stets zumindest eine gewisse Unwucht auf. Unter einer Unwucht ist hierbei insbesondere eine unsymmetrische Massenverteilung des (rotationssymmetrischen) Rotationskörpers zu verstehen, wodurch dessen Rotationsachse nicht mit einer seiner Hauptträgheitsachsen zusammenfällt oder übereinstimmt. Bei einer Rotation des Rotationskörpers treten aufgrund der Unwucht sogenannte Unwuchtskräfte als Flieh- oder Zentrifugalkräfte auf, welche mit steigender Drehzahl zunehmen, und eine unrunde, eiernde Rotationsbewegung des Rotationskörpers bewirken. Dadurch entstehen im Betrieb ungewünschte Vibrationen und Geräuschentwicklungen aufgrund der Unwucht des Rotationskörpers.

Durch die Unwucht kann die Lebensdauer eines das Bauteil oder den Rotationskörper aufweisenden Produktes und/oder die Lebensdauer von dem Rotationskörper rotierbar lagernden Lager reduziert werden. Des Weiteren besteht insbesondere bei hohen Drehzahlen die Gefahr, dass das Bauteil und/oder die Lager beschädigt oder vollständig zerstört werden.

Insbesondere bei Elektromotoren eines Kraftfahrzeugs, welche beispielsweise im Bereich einer Fahrgastzelle angeordnet werden, ist ein möglichst geräuschreduzierter Betrieb gewünscht. Des Weiteren sollen derartige Elektromotoren möglichst bauraumkompakt sein, also eine möglichst geringe (Ein-)Baugröße aufweisen. Derartige Elektromotoren benötigen daher rotationssymmetrische Bauteile, wie beispielsweise Rotoren oder Motorgehäuse, welche eine möglichst geringe Unwucht aufweisen.

Zur Beseitigung oder zur Korrektur von Unwuchten ist es möglich, den Rotationskörper oder das Bauteil zu wuchten. Bei einem Wuchten wird die unsymmetrische Massenverteilung des Rotationskörpers korrigiert oder ausgeglichen. Dies erfolgt beispielsweise durch ein Anbringen oder ein Aufbringen einer Zusatzmasse, oder durch ein Entfernen oder ein Abtragen einer Masse des Rotationskörpers, beispielsweise mittels spanender Verfahren. Dadurch wirken im Zuge des Wuchtens mechanische Kräfte auf den Rotationskörper ein.

Bei einem (Aus-)Wuchten wird zwischen einem dynamischem und einem statischem Wuchten unterschieden. Bei einem statischen Wuchten wird lediglich ein statischer Anteil der Unwucht ausgeglichen, das Wuchten erfolgt also in einer Ebene. Bei dem dynamischen Wuchten wird sowohl der statische Unwuchtsanteil als auch ein dynamischer (Moment-)Unwuchtsanteil ausgeglichen. Hierbei wird sowohl eine radiale als auch axiale Lage der Unwucht am Rotationskörper beachtet und ausgeglichen. Das Wuchten erfolgt also in zwei Ebenen des Rotationskörpers. Durch das dynamische Wuchten wird somit eine eiernde, unrunde Rotationsbewegung verhindert oder zumindest wesentlich reduziert.

Insbesondere bei vergleichsweise hohen Anforderungen an die Geräuscharmut und Lebensdauer von bauraumkompakter Elektromotoren treten bei herkömmlichen Wuchtverfahren Probleme auf. In der Regel wird die Unwucht des Rotationskörpers oder Bauteils vor und nach dem Wuchten mittels einer Unwuchtmessvorrichtung bestimmt, und in Abhängigkeit hiervon Material bzw. Masse am Rotationskörper auf- oder abgetragen. Das Wuchten und die Messung der Unwucht erfolgt regelmäßig in getrennten Vorrichtungen, wodurch ein gleichförmiger Produktionsfluss bei der Herstellung des Elektromotors beziehungsweise des Bauteils nachteilig erschwert wird.

Die US 2007/0095231 A1 offenbart eine Vorrichtung zum Auswuchten einer Druckwalze, die einen Detektor zum Erkennen einer Unwucht der Druckwalze während ihrer Drehung enthält. Ein Computer bestimmt als Reaktion auf die erkannte Unwucht eine Gewichtseinstellung, welche zur Korrektur der Unwucht erforderlich ist. Ein Laser wird vom Computer gesteuert, um als Reaktion auf die Bestimmung Material von mindestens einer gravierbaren Platte, die auf der Außenfläche der Druckwalze angebracht ist, oder von der Druckwalze selbst in einem Bereich zu entfernen, um die Druckwalze auszuwuchten.

In der WO 2007/006356 A1 ist ein Verfahren zum Wuchten eines Lüfters mittels eines außerhalb des Lüfters angeordneten, steuerbaren Lasers offenbart. Ein Lüftergehäuse zumindest in einem Gehäuse-Teilbereich derart ausgebildet, dass es eine Bearbeitung eines Rotors durch einen vom Laser ausgehenden, sich durch den Gehäuse-Teilbereich zum Rotor erstreckenden Laserstrahl ermöglicht.

Aus der DE 10 2008 053 838 A1 ist ein Verfahren und eine Vorrichtung zum Wuchten eines Rotationskörpers bekannt. Hierbei wird mindestens ein Wuchtgewicht durch Reibschweißen an dem Rotationskörper angebracht.

Die US 2018/0051771 A1 beschreibt eine Antriebswelle mit aufgeschweißten Ausgleichsgewicht und Verfahren zu deren Herstellung. Ein Lack wird hierbei von der Antriebswelle entfernt, bevor das Ausgleichsgewicht aufgeschweißt wird. Das Entlacken und Schweißen kann in das Auswuchtverfahren und die Auswuchtvorrichtung integriert sein.

Der Erfindung liegt die Aufgabe zugrunde, ein besonders geeignetes Verfahren zum dynamischen Wuchten eines Rotationskörpers anzugeben. Der Erfindung liegt weiterhin die Aufgabe zugrunde, eine besonders geeignete Vorrichtung zur Durchführung des Verfahrens anzugeben. Der Erfindung liegt weiterhin die Aufgabe zugrunde, einen besonders geeigneten Elektromotor mit einem Rotationskörper, welcher mit einem derartigen Verfahren gewuchtet ist, sowie eine besonders geeignete Verwendung eines solchen Verfahrens zum dynamischen Wuchten eines Motorgehäuses mit einem darin eingesetzten Magnetelement anzugeben.

Hinsichtlich des Verfahrens wird die Aufgabe mit den Merkmalen des Anspruchs 1 und hinsichtlich der Vorrichtung mit den Merkmalen des Anspruchs 5 sowie hinsichtlich des Elektromotors mit den Merkmalen des Anspruchs 6 und hinsichtlich der Verwendung mit den Merkmalen des Anspruchs 7 erfindungsgemäß gelöst. Vorteilhafte Ausgestaltungen und Weiterbildungen sind Gegenstand der jeweiligen Unteransprüche. Die im Hinblick auf das Verfahren angeführten Vorteile und Ausgestaltungen sind sinngemäß auch auf die Vorrichtung und/oder den Elektromotor und/oder die Verwendung übertragbar und umgekehrt.

Das erfindungsgemäße Verfahren ist zum dynamischen Wuchten eines Rotationskörpers, also eines rotationssymmetrischen Bauteils oder Werkstücks, geeignet und ausgestaltet. Der Rotationskörper ist beispielsweise ein Bauteil eines Elektromotors, insbesondere ein Rotor oder ein Motorgehäuse.

Verfahrensgemäß wird der Rotationskörper in Rotation versetzt und anschließend dessen Unwucht bestimmt. In Abhängigkeit der bestimmten Unwucht wird Material von der Wuchtmasse abgetragen und/oder Zusatzmaterial auf der Wuchtmasse aufgetragen. In Abhängigkeit der erfassten oder bestimmten Unwucht wird also ein Unwuchtsausgleich oder eine Unwuchtskorrektur zur Reduzierung der Unwucht, also zur Reduzierung einer unsymmetrischen Masseverteilung des Rotationskörpers ausgeführt. Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Der Unwuchtsausgleich oder die Unwuchtskorrektur, also die Abtragung und/oder Auftragung von Material von von (an der) Wuchtmasse, wird hierbei mittels eines Laserstrahls eines Lasers durchgeführt. Dadurch ist ein besonders geeignetes Verfahren zum Wuchten eines Rotationskörpers realisiert.

Durch den Laser beziehungsweise den Laserstrahl ist ein besonders genaues oder präzises Wuchten des Rotationskörpers ermöglicht. Dadurch können auch kleine Unwuchten zuverlässig beseitigt werden. Durch den Laser ist somit eine besonders hohe Wuchtgüte des Rotationskörpers realisierbar. Des Weiteren wirken bei einem solchen Laserwuchten keine zusätzlichen mechanischen Kräfte auf den Rotationskörper ein.

Die Abtragung erfolgt also insbesondere mittels eines (subtraktiven, negativen) Laserabtrags, wobei die Auftragung insbesondere mittels eines (additiven, positiven) Laserauftrags oder Laserauftragsschweißen (engl.: laser metal deposition, LMD) erfolgt. Beim Auftragen wird das Zusatzmaterial beispielsweise in Form eines Drahtes oder Metallpulvers zugeführt und schichtweise auf den Rotationskörper aufgetragen sowie poren- und rissfrei mittels des Laserstrahls mit dem Material des Rotationskörpers stoffschlüssig gefügt oder verschmolzen.

Das erfindungsgemäße Verfahren ist insbesondere zum Feinwuchten des Rotationskörpers vorgesehen, also zur Korrektur oder Ausgleich vergleichsweise geringer Unwuchten oder vergleichsweise geringer unsymmetrischer Masseverteilungen. Bei größeren Unwuchten ist es hierbei insbesondere möglich, dass ein zweistufiges Wuchtverfahren vorgesehen ist, bei welchen in einem groben Verfahrensschritt die Unwucht beispielsweise mittels spanenden Verfahren reduziert wird, und bei welchen in einem darauffolgenden zweiten, feineren Verfahrensschritt das erfindungsgemäße Verfahren angewandt wird.

In einer vorteilhaften Ausführung werden die Abtragung und/oder die Auftragung während der Rotation des Rotationskörpers durchgeführt. Insbesondere werden die Abtragung und/oder die Auftragung hierbei beispielsweise während der Bestimmung der Unwucht durchgeführt. Das dynamische Wuchten des Rotationskörpers erfolgt also im Wesentlichen zeitgleich zur Messung oder Bestimmung der Unwucht. Dies bedeutet, dass der Rotationskörper beispielsweise zeitgleich gemessen und gewuchtet wird. Dadurch ist ein integrierter gesteuerter Prozess realisierbar.

In einer möglichen Ausführungsform erfolgt die Abtragung insbesondere während einer Rotation des Rotationskörpers mit einer Nenndrehzahl. Durch die vergleichsweise schnelle Rotation des Rotationskörpers während der Abtragung wirkt ein besonders niedriger Energie- oder Wärmeeintrag auf das Bauteil beziehungsweise den Rotationskörper ein, so dass im Wesentlichen kein Verzug des Rotationskörpers bei der Abtragung auftritt.

Die Auftragung erfolgt insbesondere bei einer Rotation des Rotationskörpers mit einer Drehzahl, welche wesentlich niedriger als die Nenndrehzahl während der Auftragung ist. Die Drehzahl während der Abtragung ist beispielsweise zwischen größer 0% (Stillstand) und 10% der Nenndrehzahl, insbesondere zwischen größer 0% und 5% der Nenndrehzahl, vorzugsweise zwischen größer 0% und 2% der Nenndrehzahl. Die Auftragung oder das positive Wuchten erfolgt also nicht im Stillstand des Rotationskörpers, sondern bei einer im Vergleich zur Nenndrehzahl reduzierten, langsamen Rotation.

Der Unwuchtsausgleich oder die Unwuchtskorrektur erfolgt also während der Rotationskörper rotiert wird. Das Wuchten wird somit "on-the-fly" durchgeführt, wodurch eine besonders gleichförmige Produktion und Herstellung des Rotationskörpers ermöglicht ist.

In einer zweckmäßigen Ausgestaltung des Verfahrens wird das Zusatzmaterial linien- oder streifenförmig aufgetragen. Dadurch ist eine hinsichtlich des Wärmeeintrags in den Rotationskörper besonders effektive und zweckmäßige Auftragung des Zusatzmaterials realisiert.

In einer geeigneten Weiterbildung wird der Laserstrahl bei der Abtragung und/oder bei der Auftragung mittels eines Ablenkelements über den Außenumfang des Rotationskörpers bewegt. Das Ablenkelement ist hierbei geeigneterweise eine Laserweiche oder ein Spiegel. Dadurch wird die Effizienz des Verfahrens wesentlich verbessert, da der Laserstrahl nicht lediglich an einer Stelle des Rotationskörpers angeordnet ist, sondern insbesondere bei gleichzeitiger Rotation des Rotationskörpers, im Wesentlichen über dessen kompletten Außenumfang bewegt werden kann. Dies bedeutet, dass der Laserstrahl mittels des Ablenkelements insbesondere entlang einer Axialrichtung des Rotationskörpers bewegt wird, wobei der Laserstrahl aufgrund der Rotation des Rotationskörpers effektiv entlang dessen Tangential- oder Umfangsrichtung bewegt wird.

In einer alternativen Weiterbildungsform ist es beispielsweise denkbar, dass der Laserstrahl beziehungsweise der Laser selbst mittels eines Scanners über den Außenumfang des Rotationskörpers bewegt wird.

Erfindungsgemäß wird eine Wuchtmasse an einem Außenumfang des Rotationskörpers befestigt, wobei die Abtragung und/oder Auftragung mittels des Laserstrahls lediglich auf der Wuchtmasse erfolgt. Dadurch wird der Energie- und Wärmeeintrag auf den Rotationskörper selbst reduziert. Eine derartige separate Wuchtmasse ist insbesondere bei Rotationskörpern vorteilhaft, bei welchen eine Erwärmung des Materials des Rotationskörpers im Bereich des Laserstrahls nachteilige Auswirkungen hat.

Erfindungsgemäß ist die Wuchtmasse zum Zwecke einer zuverlässigen und dauerhaften Befestigung stoffschlüssig mittels Schweißens an den Außenumfang des Rotationskörpers gefügt. Dadurch ist eine betriebssichere Befestigung der Wuchtmasse, auch bei hohen Drehzahlen des Rotationskörpers gewährleistet.

Unter einem "Stoffschluss" oder einer "stoffschlüssigen Verbindung" zwischen wenigstens zwei miteinander verbundenen Teilen wird hier und im Folgenden insbesondere verstanden, dass die miteinander verbundenen Teile an Ihren Kontaktflächen durch stoffliche Vereinigung oder Vernetzung (beispielsweise aufgrund von atomaren oder molekularen Bindungskräften) gegebenenfalls unter Wirkung eines Zusatzstoffs zusammengehalten werden.

Erfindungsgemäß wird hierbei eine Wuchtmasse befestigt, deren Innenradius kleiner als ein Außenradius des Außenumfangs bemessen ist. Dies bedeutet, dass die Wuchtmasse eine etwa bogenförmige Querschnittsform aufweist, wobei die Wuchtmasse lediglich im Bereich der Freienden der Bogenarme an dem Außenumfang des Rotationskörpers anliegt. Somit ist im Bereich eines Scheitelpunktes der Wuchtmasse zwischen dem Rotationskörper und der Wuchtmasse ein Freiraum, also ein lichter Abstand gebildet. Dieser Freiraum oder Abstand wirkt als thermische Isolierung zwischen der Wuchtmasse und dem Rotationskörper. Dadurch wird eine thermische Entkopplung zwischen Wuchtmasse und Rotationskörper realisiert, wodurch der Energie- und Wärmeeintrag im Zuge des Abtragens und/oder Auftragens auf den Rotationskörper weiter reduziert wird.

Die erfindungsgemäße Vorrichtung ist zum dynamischen Wuchten eines Rotationskörpers geeignet und eingerichtet. Eine bogenförmige Wuchtmasse mit einem Innenradius, welcher kleiner als ein Außenradius eines Außenumfangs des Rotationskörpers ist, wird im Bereich der Freienden der Bogenarme an einem Außenumfang des Rotationskörper stoffschlüssig geschweißt, so dass durch den Radiusunterschied im Bereich eines Scheitelpunktes der Wuchtmasse zwischen der Wuchtmasse und dem Rotationskörper ein Freiraum als thermische Isolierung gebildet ist. Die Vorrichtung weist hierbei eine Unwuchtmessvorrichtung zur Bestimmung einer Unwucht des Rotationsköpers auf. Die Vorrichtung weist weiterhin einen Laser zur Erzeugung eines Laserstrahls auf, mittels welchem Material der Wuchtmasse abtragbar und/oder Zusatzmaterial auf die Wuchtmasse auftragbar ist. Die Unwuchtmessvorrichtung und der Laser sind mit einem Controller, also einer Steuereinheit, gekoppelt.

Der Controller ist hierbei allgemein - programm- und/oder schaltungstechnisch - zur Durchführung des vorstehend beschriebenen erfindungsgemäßen Verfahrens eingerichtet. Der Controller ist somit konkret dazu eingerichtet, anhand von Unwuchtdaten der Unwuchtmessvorrichtung die Unwucht des Rotationskörpers, also die Position und Lage der unsymmetrischen Masseverteilung, zu bestimmen, und einen benötigten Unwuchtausgleich oder eine Unwuchtskorrektur zu berechnen, sowie die Unwucht durch Ansteuerung des Lasers zu reduzieren.

In einer bevorzugten Ausgestaltungsform ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Vorrichtungsnutzer - bei Ausführung der Betriebssoftware in dem Mikrocontroller automatisch durchgeführt wird. Der Controller kann im Rahmen der Erfindung alternativ aber auch durch ein nicht-programmierbares elektronisches Bauteil, wie zum Beispiel einem anwendungsspezifischen integrierten Schaltkreis (ASIC), gebildet sein, in dem die Funktionalität zur Durchführung des erfindungsgemäßen Verfahrens mit schaltungstechnischen Mitteln implementiert ist.

Die Unwuchtmessvorrichtung weist hierbei beispielsweise eine Aufnahme für den Rotationskörper auf, und rotiert diesen im Betrieb, wobei mittels Kraftsensoren die auftretenden Unwuchtkäfte erfasst werden. Aus den aufgenommenen Kraftsignalen bestimmt oder berechnet der Controller die Unwucht des rotierenden Rotationskörpers sowie den notwendigen Unwuchtsausgleich. Im Wesentlichen zeitgleich wird der Laserstrahl kontinuierlich oder gepulst auf den sich insbesondere drehenden Rotationskörper eingestrahlt, um den Unwuchtsausgleich zu realisieren oder umzusetzen.

Der Laser ist beispielsweise als kontinuierlich arbeitender Faserlaser mit einer Laserleistung von beispielsweise 12 kW (Kilowatt) ausgeführt, wobei die Wellenlänge insbesondere an das abzutragende und/oder aufzutragende Material des Rotationskörpers bzw. des Zusatzmaterials angepasst ist. Beispielsweise wird bei einem Kohlenstoffstahl insbesondere ein Faserlaser mit einer Wellenlänge von etwa 1060 nm (Nanometer) verwendet.

Der Laserstrahl wird hierbei im Zuge des Auftragens oder Abtragens insbesondere gepulst, also impulsförmig auf den Rotationskörper oder das Zusatzmaterial eingestrahlt. Hierbei sind beispielsweise Pulslängen oder Pulsdauern von Einzelpulsen des Lasers vorgesehen, welche vorzugsweise kleiner 100 µs (Mikrosekunden) sind. Mehrere Einzelpulse können hintereinander als ein Pulspaket oder als eine Pulsfolge zur Abtragung oder Auftragung erzeugt werden, beispielsweise mit einer Pulspaketdauer von bis zu 10 ms (Millisekunden). Der Laser ist hierbei zweckmäßigerweise mit der Unwuchtmessvorrichtung synchronisiert.

Der erfindungsgemäße Elektromotor ist für ein Kraftfahrzeug vorgesehen, und weist einen Rotationskörper auf, welcher nach dem vorstehend beschriebenen Verfahren dynamisch gewuchtet ist. Der Rotationskörper ist hierbei beispielsweise ein Motorgehäuse, insbesondere ein Poltopf, mit einem darin eingesetzten Magnetelement, insbesondere einem Motorringmagneten. Der Elektromotor ist hierbei beispielsweise als ein Außenläufer für einen elektromotorischen Verstellantrieb des Kraftfahrzeugs ausgebildet, beispielsweise für einen Kühlerlüfter oder für einen Fensterheber, wobei das Motorgehäuse mit dem Motorringmagnet insbesondere als ein Rotor des Elektromotors ausgeführt ist.

Das Magnetelement ist hierbei vergleichsweise temperaturempfindlich, da beispielsweise bei Temperaturen über 120°C Entmagnetisierungseffekte auftreten können. Durch das erfindungsgemäße Verfahren ist ein besonders niedriger Wärmeeintrag auf das Motorgehäuse und das Magnetelement gewährleistet, wodurch der Rotationskörper in einfacher und zuverlässiger Weise dynamisch gewuchtet ist. Dadurch ist eine besonders gleichförmige Produktion und Herstellung des Rotationskörpers, und somit des Elektromotors ermöglicht.

In einer bevorzugten Anwendung wird das vorstehend beschriebene Verfahren nach somit insbesondere zum dynamischen Auswuchten eines Motorgehäuses mit einem darin eingesetzten Magnetelement verwendet.

Nachfolgend sind Ausführungsbeispiele der Erfindung anhand einer Zeichnung näher erläutert. Darin zeigen in schematischen und vereinfachten Darstellungen:
- Fig. 1: in Teil-Schnittansicht eine Vorrichtung zum dynamischen Wuchten eines Motorgehäuses als Rotationskörper,
- Fig. 2: in perspektivischer Ansicht das Motorgehäuse mit einer Welle,
- Fig. 3: in perspektivischer Ansicht das Motorgehäuse mit einer Wuchtmasse, und
- Fig. 4: in Teil-Schnittansicht das Motorgehäuse mit der Wuchtmasse entlang der Linie IV-IV gemäß Fig. 3.

Einander entsprechende Teile und Größen sind in allen Figuren stets mit den gleichen Bezugszeichen versehen.

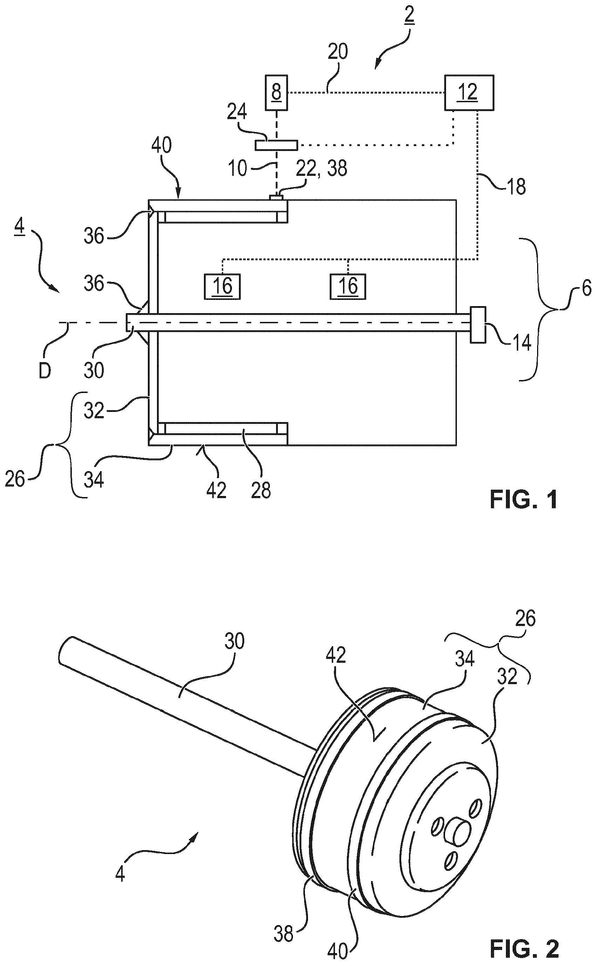

In der Fig. 1 ist eine Vorrichtung 2 zum dynamischen Wuchten eines Rotationskörpers 4 schematisch und vereinfacht dargestellt. Die Vorrichtung 2 weist hierbei eine Unwuchtmessvorrichtung 6 zur Bestimmung einer Unwucht des Rotationsköpers 4 auf. Die Vorrichtung 2 weist weiterhin einen Laser 8 zur Erzeugung eines Laserstrahls 10 auf, mittels welchem in Abhängigkeit der bestimmten Unwucht Material des Rotationskörpers 4 abgetragen und/oder Zusatzmaterial auf den Rotationskörper 4 aufgetragen wird. Die Unwuchtmessvorrichtung 6 und der Laser 8 sind mit einem Controller 12, also einer Steuereinheit, signaltechnisch gekoppelt.

Vorzugsweise ist der Rotationskörper 4 beidseitig an seinen Stirnseiten jeweils in einem Lager 14 der Unwuchtmessvorrichtung 6 entlang seiner Längsachse drehbar gelagert, wobei in der Fig. 1 beispielhaft lediglich ein Lager 14 gezeigt ist.

Die Unwuchtmessvorrichtung 6 weist mindestens einen Unwuchtsensor 16 auf, welcher die auftretende Unwucht des rotierenden Rotationskörpers 4 beispielsweise durch Kraft- und/oder Wegmessung erfasst. In der Fig. 1 sind beispielhaft zwei Unwuchtsensoren 16 gezeigt.

Der mindestens eine Unwuchtsensor 16 sendet die aufgenommenen Daten als Unwuchtsignale 18 an den Controller 12, welcher in der Folge die Unwucht des rotierenden Rotationskörpers 4 sowie den notwendigen Unwuchtsausgleich beziehungsweise die notwendige Unwuchtskorrektur bestimmt oder berechnet. Der Controller 12 bestimmt hierbei insbesondere die Position und Lage der unsymmetrischen Masseverteilung. Anschließend wird mittels eines Lasersignals 20 der Laser 8 beziehungsweise der Laserstrahl 10 kontinuierlich oder gepulst auf den sich drehenden Rotationskörper 4 eingestrahlt, um den Unwuchtsausgleich zu realisieren oder umzusetzen. Hierbei wird je nach notwendigen Unwuchtsausgleich in einer nicht erfindungsgemäße Ausführung entweder Material des Rotationskörper 4 mittels subtraktiven Laserabtrags abgetragen oder entfernt, oder Zusatzmaterial 22 mittels Laserauftrags oder Laserauftragsschweißen (LMD) aufgetragen oder hinzugefügt, um die unsymmetrischen Masseverteilung des Rotationskörpers 4 zu reduzieren.

Der Laserstrahl 10 wird bei der Abtragung und/oder bei der Auftragung mittels eines mit dem Controller 12 gekoppelten Ablenkelements 24 über den Außenumfang des Rotationskörpers 4 bewegt. Das Ablenkelement 24 ist geeigneterweise als eine Laserweiche oder ein Spiegel ausgebildet. Mittels des Ablenkelements 24 ist der Laserstrahl 10 entlang einer Axialrichtung des Rotationskörpers 4 bewegbar, wobei der Laserstrahl 10 gleichzeitig aufgrund der Rotation des Rotationskörpers 4 effektiv entlang dessen Tangential- oder Umfangsrichtung bewegt wird. Dies bedeutet, dass die Auftragung und/oder die Abtragung insbesondere in radialer und/oder axialer Richtung des Rotationskörpers 4 erfolgen.

Unter "axial" oder einer "Axialrichtung" wird hier und im Folgenden insbesondere eine Richtung parallel (koaxial) zur Drehachse D des Rotationskörpers 4 verstanden. Entsprechend wird hier und im Folgenden unter "radial" oder einer "Radialrichtung" insbesondere eine senkrecht (quer) zur Drehachse D orientierte Richtung entlang des Rotationskörpers 4 verstanden. Unter "tangential" oder einer "Tangentialrichtung" wird hier und im Folgenden insbesondere eine Richtung entlang des Umfangs des Rotationskörpers 4 (Umfangsrichtung, Azimutalrichtung), also eine Richtung senkrecht zur Axialrichtung und zur Radialrichtung, verstanden.

Der Laser 8 ist beispielsweise als kontinuierlich arbeitender Faserlaser mit einer Laserleistung von 12 kW und mit einer Wellenlänge von etwa 1060 nm ausgeführt.

Der Laserstrahl 10 wird hierbei im Zuge des Auftragens oder Abtragens insbesondere gepulst, also impulsförmig auf den Rotationskörper 4 eingestrahlt. Hierbei sind beispielsweise Pulslängen oder Pulsdauern zwischen 0,1 - 10 ms (Millisekunden) vorgesehen. Die Auftragung und/oder die Abtragung mittels des Laserstrahls 10 erfolgt hierbei insbesondere linienförmig entlang der Umfangs- oder Tangentialrichtung des Rotationskörpers 4. Der Laser 8 ist hierbei insbesondere mit der Rotation durch die Unwuchtmessvorrichtung 6 gesteuerten Rotation des Rotationskörpers 4 synchronisiert.

Die Abtragung und/oder die Auftragung werden also mittels der Vorrichtung 2 während der Rotation des Rotationskörpers 4 durchgeführt. Insbesondere werden die Abtragung und/oder die Auftragung hierbei während der Bestimmung der Unwucht durchgeführt. Das dynamische Wuchten des Rotationskörpers 4 erfolgt also beispielsweise zeitgleich zur Messung oder Bestimmung der Unwucht. Der Unwuchtsausgleich oder die Unwuchtskorrektur erfolgt also somit "on-the-fly".

Der Rotationskörper 4 ist in den gezeigten Ausführungsbeispielen der Figuren 1 bis 4 insbesondere als ein rotationssymmetrisches Bauteil eines nicht näher gezeigten Elektromotors eines Kraftfahrzeugs ausgebildet. Der Rotationskörper 4 ist insbesondere als ein Motorgehäuse 26, insbesondere als ein Poltopf, mit einem darin eingesetzten Magnetelement 28, insbesondere einem (Motor-)Ringmagneten, und mit einer Motorwelle 30 ausgeführt. Der Rotationskörper 4 ist somit insbesondere als ein Rotor eines als Außenläufer ausgeführten Elektromotors ausgebildet.

Das in Fig. 2 bis 4 dargestellte glockenförmige oder topfförmige Motorgehäuse 26 weist ein metallisches Stanzteil in Form eines Lagerschilds 32 als Gehäuseboden, und eine metallische, insbesondere hohlzylindrische oder rohrförmige, Ringwand 34 als Gehäusemantel oder Gehäusewand auf. Die Motorwelle 30 weist hierbei beispielsweise einen Durchmesser zwischen 2 bis 10 mm (Millimeter) auf, und ist aus einem geschliffenen Stahl hergestellt. Das Lagerschild 32 und die Ringwand 34 sowie die Motorwelle 30 sind mittels stoffschlüssigen Verbindungen 36 miteinander gefügt. Das ringförmige oder hohlzylindrische beziehungsweise rohrförmige Magnetelement 28 ist am Innenumfang der Ringwand 34 angeordnet.

Das Auftragen und/oder Abtragen zur Unwuchtskorrektur erfolgt hierbei in einer nicht erfindungsgemäßen Ausführung in zwei Unwuchts- oder Ausgleichsbereichen 38 und 40 an einem Außenumfang 42 des Motorgehäuses 26. Die etwa ring- oder bandförmigen Unwuchtsbereiche 38 und 40 sind axial zueinander beabstandet an der Ringwand 34 angeordnet, wobei der Unwuchtsbereich 38 an der dem Lagerschild 32 abgewandten Ende, und der Unwuchtsbereich 40 an der dem Lagerschild 32 zugewandten Ende der Ringwand 34 angeordnet ist.

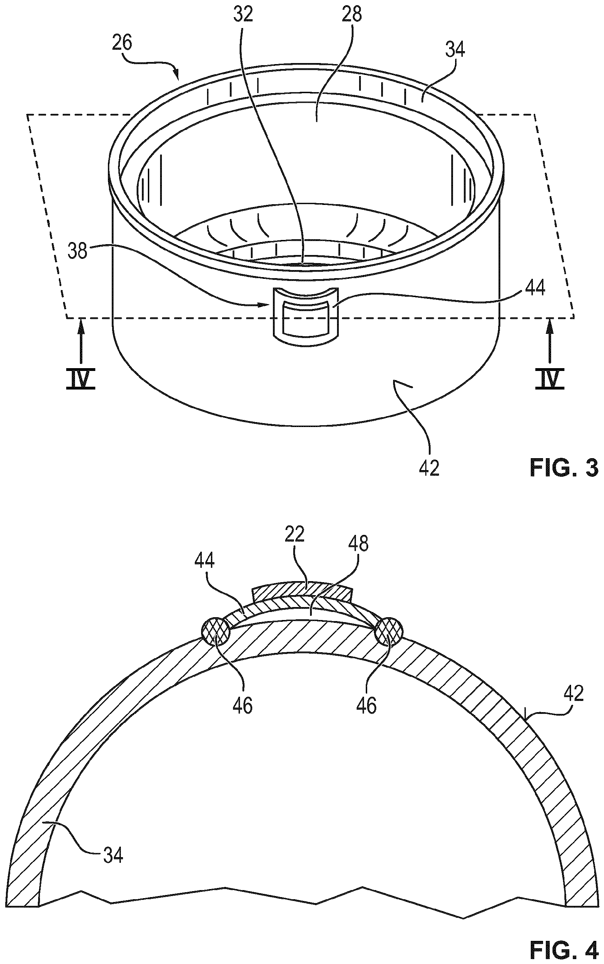

Das Magnetelement 28 weist beispielsweise eine maximal zulässige Temperatur von etwa 120°C auf. Um insbesondere im Zuge einer radialen Auftragung von Zusatzmaterial 22 eine ungewünschte Überschreitung dieser Magnettemperatur zu vermeiden, ist es in dem in Fig. 3 und Fig. 4 gezeigten erfindungsgemäßen Ausführungsbeispiel vorgesehen, dass an dem Außenumfang 42 eine Zusatz- oder Wuchtmasse 44 angeordnet wird, auf welcher die Auftragung erfolgt. Dadurch wird der Energie- und Wärmeeintrag auf die Ringwand 34 und somit auf das Magnetelement 28 reduziert.

Die Wuchtmasse 44 ist hierbei geeigneterweise in einem der Unwuchtsbereiche 38, 40 angeordnet, wobei die Wuchtmasse 44 in dem Ausführungsbeispiel der Fig. 3 und der Fig. 4 insbesondere im Bereich 38 angeordnet ist. In einer geeigneten Dimensionierung weist die Wuchtmasse 44 beispielsweise eine Masse zwischen 5 bis 20 mg (Milligramm) und 100 bis 300 mg auf.

Wie insbesondere in der schematischen Teil-Schnittansicht der Fig. 4 ersichtlich ist, ist die Wuchtmasse 44 insbesondere mittels zweier Schweißpunkte 46 stoffschlüssig an den Außenumfang 42 des Motorgehäuses 26 gefügt. Die Wuchtmasse 44 weist hierbei einen Innenradius auf, welcher kleiner dimensioniert ist als ein Außenradius des Außenumfangs 42. Der Radiusunterschied zwischen dem Innenradius der Wuchtmasse 44 und dem Außenradius des Außenumfangs 42 ist beispielsweise kleiner gleich 1 mm.

Durch den Radiusunterschied weist die Wuchtmasse 44 eine etwa bogenförmige oder gewölbte Querschnittsform auf, wobei die Schweißpunkte 46 im Bereich der Freienden der Bogenarme angeordnet sind. Somit ist im Bereich eines Scheitelpunktes der Wuchtmasse 44 zwischen der Ringwand 34 und der Wuchtmasse 44 ein radialer Freiraum 48, also ein lichter Abstand entlang der Radialrichtung, gebildet oder freigestellt. Dieser Freiraum 48 wirkt als thermische Isolierung zwischen der Wuchtmasse 44 und der Ringwand 34 beziehungsweise dem Magnetelement 28. Dadurch wird eine thermische Entkopplung zwischen Wuchtmasse 28 und Rotationskörper 4 realisiert, wodurch der Energie- und Wärmeeintrag im Zuge des Abtragens und/oder Auftragens auf den Rotationskörper 4 reduziert wird.

Die Ringwand 34 und das Lagerschild 32 sowie die Wuchtmasse 28 sind beispielsweise aus Stahl, insbesondere Edelstahl oder Kohlenstoffstahl (Karbonstahl), hergestellt.

### Bezugszeichenliste

- 2: Vorrichtung
- 4: Rotationskörper
- 6: Unwuchtmessvorrichtung
- 8: Laser
- 10: Laserstrahl
- 12: Controller
- 14: Lager
- 16: Unwuchtsensor
- 18: Kraftsignal
- 20: Lasersignal
- 22: Zusatzmaterial
- 24: Ablenkelement
- 26: Motorgehäuse
- 28: Magnetelement
- 30: Motorwelle
- 32: Lagerschild
- 34: Ringwand
- 36: Verbindung
- 38: Unwuchtsbereich
- 40: Unwuchtsbereich
- 42: Außenumfang
- 44: Wuchtmasse
- 46: Schweißpunkt
- 48: Freiraum

- D: Drehachse

## Patentansprüche

1. Verfahren zum dynamischen Wuchten eines Rotationskörpers (4),
- wobei eine bogenförmige Wuchtmasse (44) im Bereich der Freienden der Bogenarme der bogenförmigen Wuchtmasse (44) mit jeweils einem Schweißpunkt (46) stoffschlüssig mittels Schweißen an einem Außenumfang (42) des Rotationskörpers (4) befestigt wird,
- wobei die Wuchtmasse (44) einen Innenradius aufweist, welcher kleiner als ein Außenradius des Außenumfangs (42) ist, so dass durch den Radiusunterschied im Bereich eines Scheitelpunktes der Wuchtmasse (44) zwischen der Wuchtmasse (44) und dem Rotationskörper (4) ein Freiraum als thermische Isolierung gebildet ist,
- wobei der Rotationskörper (4) in Rotation versetzt wird,
- wobei eine Unwucht des Rotationsköper (4) bestimmt wird,
- wobei in Abhängigkeit der bestimmten Unwucht Material auf der Wuchtmasse (44) abgetragen und/oder Zusatzmaterial (22) auf der Wuchtmasse (44) aufgetragen wird, und
- wobei die Abtragung und/oder die Auftragung mittels eines Laserstrahls (10) eines Lasers (8) durchgeführt werden.

2. Verfahren nach Anspruch 1,
**dadurch gekennzeichnet,**
**dass** die Abtragung und/oder die Auftragung während der Rotation des Rotationskörpers (4) durchgeführt werden.

3. Verfahren nach Anspruch 1 oder 2,
**dadurch gekennzeichnet,**
**dass** das Zusatzmaterial (22) linienförmig aufgetragen wird.

4. Verfahren nach einem der Ansprüche 1 bis 3,
**dadurch gekennzeichnet,**
**dass** der Laserstrahl (10) bei der Abtragung und/oder bei der Auftragung mittels eines Ablenkelements (24) über einen Außenumfang (42) des Rotationskörpers (4) bewegt wird.

5. Vorrichtung (2) zum dynamischen Wuchten eines Rotationskörpers (4), aufweisend
- eine bogenförmige Wuchtmasse (44) mit einem Innenradius, welcher kleiner als ein Außenradius eines Außenumfangs (42) des Rotationskörpers (4) ist,
- eine Schweißeinheit zum stoffschlüssigen Schweißen der Wuchtmasse (44) im Bereich der Freienden der Bogenarme an dem Außenumfang (42), so dass durch den Radiusunterschied im Bereich eines Scheitelpunktes der Wuchtmasse (44) zwischen der Wuchtmasse (44) und dem Rotationskörper (4) ein Freiraum als thermische Isolierung gebildet ist,
- eine Unwuchtmessvorrichtung (6) zur Bestimmung einer Unwucht des Rotationsköpers (4),
- einen Laser (8) zur Erzeugung eines Laserstrahls (10), mittels welchem Material der Wuchtmasse (44) abtragbar und/oder Zusatzmaterial (22) auf die Wuchtmasse (44) auftragbar ist, und
- einen Controller (12) zur Durchführung des Verfahrens nach einem der Ansprüche 1 bis 4.

6. Elektromotor eines Kraftfahrzeugs, aufweisend einen Rotationskörper (4), welcher mit einem Verfahren nach einem der Ansprüche 1 bis 4 dynamisch gewuchtet ist.

7. Verwendung des Verfahrens nach einem der Ansprüche 1 bis 4 zum dynamischen Wuchten eines Rotationskörpers (4), welcher als ein Motorgehäuse (26) mit einem darin eingesetzten Magnetelement (28) ausgeführt ist.

## Claims

1. Method for dynamically balancing a rotational body (4),
- wherein an arc-shaped balancing mass (44) is fastened in the region of the free ends of the arms of the arc of the arc-shaped balancing mass (44) on an outer circumference (42) of the rotational body (4) in a material-bonding manner by means of welding by a respective welding point (46),
- wherein the balancing mass (44) has an inner radius that is smaller than an outer radius of the outer circumference (42), so that the difference in radius has the effect that a clearance is formed in the region of an apex point of the balancing mass (44) as thermal insulation between the balancing mass (44) and the rotational body (4),
- wherein the rotational body (4) is set in rotation,
- wherein an imbalance of the rotational body (4) is determined,
- wherein, in dependence on the determined imbalance, material of the balancing mass (44) is removed and/or additional material (22) is applied to the balancing mass (44), and
- wherein the removal and/or the application is/are carried out by means of a laser beam (10) of a laser (8).

2. Method according to Claim 1,
**characterized**
**in that** the removal and/or the application is/are carried out during the rotation of the rotational body (4) .

3. Method according to Claim 1 or 2,
**characterized**
**in that** the additional material (22) is applied in the form of lines.

4. Method according to one of Claims 1 to 3,
**characterized**
**in that**, during the removal and/or application, the laser beam (10) is moved over an outer circumference (42) of the rotational body (4) by means of a deflecting element (24).

5. Device (2) for dynamically balancing a rotational body (4), having
an arc-shaped balancing mass (44) with an inner radius that is smaller than an outer radius of an outer circumference (42) of the rotational body (4),
- a welding unit for welding the balancing mass (44) in the region of the free ends of the arms of the arc on the outer circumference (42) in a material-bonding manner, so that the difference in radius has the effect that a clearance is formed in the region of an apex point of the balancing mass (44) as thermal insulation between the balancing mass (44) and the rotational body (4),
- an imbalance measuring device (6) for determining an imbalance of the rotational body (4),
- a laser (8) for generating a laser beam (10) by means of which material of the balancing mass (44) can be removed and/or additional material (22) can be applied to the balancing mass (44), and
- a controller (12) for carrying out the method according to one of Claims 1 to 4.

6. Electric motor of a motor vehicle, having a rotational body (4) which has been dynamically balanced by a method according to one of Claims 1 to 4.

7. Use of a method according to one of Claims 1 to 4 for dynamically balancing a rotational body (4) which is configured as a motor housing (26) with a magnet element (28) fitted therein.

## Revendications

1. Procédé d'équilibrage dynamique d'un corps rotatif (4),
- une masse d'équilibrage incurvée (44) étant fixée par soudage par liaison de matière à une circonférence extérieure (42) du corps rotatif (4) dans la zone de chacune des extrémités libres, comprenant un point de soudage (46), des bras incurvés de la masse d'équilibrage incurvée (44),
- la masse d'équilibrage (44) présentant un rayon intérieur qui est inférieur à un rayon extérieur de la circonférence extérieure (42) de sorte que la différence de rayon dans la zone d'un sommet de la masse d'équilibrage (44) entre la masse d'équilibrage (44) et le corps rotatif (4) forme un espace libre servant d'isolation thermique,
- le corps rotatif (4) étant mis en rotation,
- un déséquilibrage du corps rotatif (4) étant déterminé,
- en fonction du déséquilibrage spécifique, de la matière étant retirée de la masse d'équilibrage (44) et/ou de la matière supplémentaire (22) étant déposée sur la masse d'équilibrage (44), et
- le retrait et/ou le dépôt étant effectués à l'aide d'un faisceau laser (10) d'un laser (8).

2. Procédé selon la revendication 1,
**caractérisé en ce que**
le retrait et/ou le dépôt sont effectués pendant la rotation du corps rotatif (4).

3. Procédé selon la revendication 1 ou 2,
**caractérisé en ce que**
la matière supplémentaire (22) est déposée de manière linéaire.

4. Procédé selon l'une des revendications 1 à 3, **caractérisé en ce que**
le faisceau laser (10) est déplacé sur une circonférence extérieure (42) du corps rotatif (4) lors du retrait et/ou du dépôt au moyen d'un élément de déviation (24).

5. Dispositif (2) d'équilibrage dynamique d'un corps rotatif (4), ledit dispositif comportant
- une masse d'équilibrage incurvée (44) ayant un rayon intérieur qui est inférieur à un rayon extérieur d'une circonférence extérieure (42) du corps rotatif (4),
- une unité de soudage destinée à souder par liaison de matière la masse d'équilibrage (44) dans la zone des extrémités libres des bras incurvés sur la circonférence extérieure (42) de telle sorte que la différence de rayon dans la zone d'un sommet de la masse d'équilibrage (44) entre la masse d'équilibrage (44) et le corps rotatif (4) forme un espace libre servant d'isolation thermique,
- un dispositif de mesure de déséquilibrage (6) destiné à déterminer un déséquilibrage du corps rotatif (4),
- un laser (8) destiné à générer un faisceau laser (10) au moyen duquel de la matière peut être retirée de la masse d'équilibrage (44) et/ou une matière supplémentaire (22) peut être déposée sur la masse d'équilibrage (44), et
- un contrôleur (12) destiné à mettre en oeuvre le procédé selon l'une des revendications 1 à 4.

6. Moteur électrique d'un véhicule automobile, ledit moteur électrique comportant un corps rotatif (4) qui est équilibré dynamiquement à l'aide d'un procédé selon l'une des revendications 1 à 4.

7. Utilisation du procédé selon l'une des revendications 1 à 4 pour effectuer l'équilibrage dynamique d'un corps rotatif (4) qui est conçu comme un boîtier de moteur (26) dans lequel est inséré un élément magnétique (28).
